# EUROPEAN PATENT APPLICATION

(11) **EP 2 244 447 A2**
(43) Date of publication of application: **27.10.2010**
(21) Application number: 10160920.4
(22) Date of filing: 23.04.2010
(51) Int. Cl.: H04M 1/725, H04W 4/02, H04L 29/08

(54) **Method of communication among portable electronic devices located at less than a predetermined distance from one another.**

(30) Priority: 23.04.2009 IT MI20090694
(71) Applicant: Ferrari, Andrea, 30016 Jesolo (IT); Visentin, Remo, 20144 Milano (IT)
(72) Inventor: Ferrari, Andrea, 30016 Jesolo (IT); Visentin, Remo, 20144 Milano (IT)
(74) Representative: Bonvicini, Davide

(57) **Abstract**

A method of communication among portable electronic devices (1a, 1b) situated at less than a predetermined distance (d) and comprising a characterization profile (2a, 2b) of a corresponding user, the method comprising the steps of - sending a broadcast message (M1) at a preset frequency from a first electronic device (1a), which message comprises a device ID (id1) and the characterization profile (2a) of the corresponding user; - receiving the broadcast message (M1) in a second electronic device (1a), comparing the characterization profile (2a) of the broadcast message (M1) with the characterization profile (2b) of the second electronic device (2a) and providing an affinity value (3) for the characterization profiles (2a, 2b).

## Description

The present invention relates to a method of communication among portable electronic devices located at less than a predetermined distance from one another.

Particularly, the present invention relates to a method as mentioned above in which the portable electronic devices have a short-distance wireless communication interface.

The present invention also relates to a method of communication among portable electronic devices located at less than a predetermined distance from one another and connected to a GSM network of a telephone service provider. In methods of communication among portable electronic devices located at less than a predetermined distance from one another, a first portable electronic device, such as a cell phone, a notebook, a PDT, etc. equipped with an integrated circuit for transmitting and receiving information, is known to transmit a message to a second portable electronic device, which is also equipped with a corresponding integrated circuit. The integrated circuit comprises a transceiver operating at a predetermined frequency and according to a predetermined communication protocol, such as a frequency of 2.4 GHz and a Bluetooth® protocol.

Particularly, with this protocol, two or more portable electronic devices as mentioned above share a communication channel through which they may transmit and receive even in high-interference environments at a data rate of about 1 Mbps, even with low powers, in the milliwatt range. In much the same manner, portable electronic devices may communicate with a different communication protocol, such as the Zigbee® protocol.

One drawback of the above methods is that they cannot select the portable electronic devices of a friend or a known person, with which communication , e.g. via phone, SMS or chat, is desired.

This drawback is even more apparent in methods of communication among portable electronic devices located at less than a predetermined distance from one another and connected to a GSM network of a telephone service provider. These methods only support communication over a GSM pay network, even when users are at short distances from one another, and do not allow selection of the users for communication.

The invention is based on the technical problem of providing a method of communication that can automatically recognize, among a plurality of portable electronic devices located at less than a predetermined distance from one another, the devices associated with users that might want to communicate, thereby solving the technical problems that still affect prior art communication methods.

The solution suggested by the present invention is to store a characterization profile of a user in a portable electronic device, which profile comprises distinctive features of the user and distinctive features of people with whom such user wants to communicate, transmit the characterization profile among devices placed at less than a predetermined distance from one another and select, among the received characterization profiles, those that correspond to the desired descriptive features.

Particularly, the suggested solution consists in storing the characterization profile in a memory of the device and transmitting the profile to a plurality of portable electronic devices connected thereto by a wireless connection and having respective characterization profiles, comparing the received characterization profile with the stored characterization profile in the receiving devices and only displaying connections to portable electronic devices having a selected characterization profile on a display of the device.

With this suggested solution, the technical problem is solved by a method of communication among portable electronic devices located at less than a predetermined distance, each comprising a characterization profile of a user, the method including the steps of: - sending a broadcast message at a preset frequency from a first electronic device, which message comprises a device ID and the characterization profile of its user; - receiving the broadcast message in a second electronic device and comparing the characterization profile of the broadcast message with the characterization profile of the second electronic device, and providing an affinity value of the characterization profiles; - establishing communication between respective users of the electronic devices if the affinity value exceeds a predetermined threshold. The broadcast message is sent to all the portable electronic devices located at less than the predetermined distance and does not indicate a receiver device. Advantageously, the communication method that is carried out in a plurality of portable electronic devices located in a predetermined geographical area and at less than the preset distance allows the display of each device to only display the available connections to devices having a selected characterization profile, i.e. similar to one's own preset characterization profile.

Advantageously, the characterization profile comprises information such as sex of user, sex of prospective communicating users, date of birth, minimum age and maximum age of the prospective communicating users. The preset threshold may be manually set to select a larger or smaller number of portable electronic devices, and make comparison more or less selective.

The method of the invention comprises a step of transmitting a response message to the broadcast message from the second electronic device to the first electronic device, which response message comprises the characterization profile of the second electronic device, hereinafter referred to as match request. Particularly, the automatic comparison step is also carried out in the portable electronic device that sent the broadcast message, after reception of the response message. The characterization profile transmitted in the response message may contain more information than the characterization profile in the broadcast message.

Advantageously, the match request allows the user of the portable electronic device that sent the broadcast message to automatically check the characterization profile/s of one or more devices that responded to the broadcast message. Particularly, if automatic comparison of the characterization profile in the response message provides an affinity value below the preset threshold, the connection with the corresponding device is not displayed.

Particularly, the step of checking the affinity value in the first electronic device comprises a further step of comparing the characterization profile of the response message with the characterization profile of the first electronic device and a further step of transmitting an acknowledgement message comprising the characterization profile of the first electronic device from the first electronic device to the second electronic device, said message being also referred to hereinafter as response to the match request.

Advantageously, the response to the match request allows the device that sent the response message to check the characterization profile of the device that sent the broadcast message, the latter profile preferably comprising additional information that were not transmitted with the broadcast message.

The step of establishing communication occurs by transmission of a communication proposal message from the second electronic device to the first electronic device, after reception of the acknowledgement message, and later transmission of a communication acceptance message from the first electronic device to the second electronic device, after reception of the communication proposal message.

Particularly, the communication proposal message and the communication acceptance message are manually sent by the users of the corresponding electronic devices.

Advantageously, with the method of the invention, the comparison step selects the most relevant characterization profiles, but the communication request is manually actuated by the user; this allows refusal of communication with a device having a characterization profile with an affinity value exceeding the preset threshold.

The response message, the acknowledgement message, the communication proposal message and the communication acceptance message include the device ID of the electronic device that sends the corresponding message, such ID being also referred to as sender ID. The response message, the acknowledgement message, the communication proposal message and the communication acceptance message further include the device ID of the electronic device that is intended to receive the corresponding message, also referred to as receiver ID.

In one aspect of the present invention, the above messages are added to a transmission queue or stack, comprising a plurality of records, each record including a message transmission state of predetermined value and associated with a request for message transmission, a request for record deletion from the queue or a request for record relocation in the queue.

Advantageously, the addition of the message to the transmission queue allows repeated message transmission until the addressed device acknowledges receipt thereof, with a number of sending attempts being possibly set above which the message is removed from the queue. The broadcast message, that is not addressed to a particular device, is directly removed from the queue after transmission. Advantageously, the queue also acts as a buffer storage for messages that cannot be immediately sent, e.g. because the available transmission channel is saturated or no connection is available.

The queue processing step comprises accessing a message to be processed in the queue, reading the transmission state for the first message and transmitting the message if the transmission state value matches the transmission request, deleting the record if the value matches the deletion request or relocating the message-containing record if the value matches the relocation request. Advantageously, the queue may be handled in FIFO mode (first in first out), with the highest transmission priority being given to messages that were added first.

Each record of the queue further comprises a number of message transmission attempts, which has a predetermined value and is decreased at each execution of the message transmission step. Advantageously, with the method of the present invention, an unsent message, e.g. a message for which no corresponding response message was received, is not removed from the queue but relocated for a later sending attempt.

Nevertheless, the message is not relocated indefinitely in the queue, and is removed after a predetermined number of sending attempts. Particularly, the message transmission step is not executed if the number of transmission attempts is lower than a preset number.

With the method of the present invention, the step of establishing communication among users and electronic devices may establish communications of different types, such as a telephone communication, a SMS communication or a chat communication. Preferably, such communication is established by selecting an icon on the display of the corresponding portable electronic devices, like in a telephone call.

With the above mentioned suggested solution, the technical problem that forms the basis of the present invention is also solved by a method of communication among portable electronic devices connected to a GSM network of a telephone service provider and each associated with a characterization profile of a user, the method including the steps of: - locating at least two portable electronic devices situated at less than a predetermined distance (d) within the telephone service provider; - comparing the characterization profiles of two portable electronic devices and providing an affinity value for said characterization profiles; - sending a device ID of further located portable electronic devices from the telephone service provider to each located portable electronic device; - establishing communication among users of the electronic devices, if the affinity value of their respective characterization profiles exceeds a preset threshold.

Advantageously, in this aspect of the present invention, communication is established through the GSM network of the telephone service provider. Particularly, in one embodiment of the method, the provider stores and compares the characterization profiles of the portable electronic devices. Advantageously, the devices only receive the ID of the device with which they can communicate and the comparison step is executed centrally, at the provider. A profile updating step is also provided, in which the portable electronic device transmits its updated characterization profile to the provider.

In a different embodiment of the method, the sending step includes transmission of the characterization profile of further located portable electronic devices, from the provider to each located portable electronic device, and the comparison step is carried out separately in each portable electronic device.
Figure 1 is a diagrammatic view of two portable electronic devices communicating with each other according to the inventive method.
Figures 2 and 2a are block diagrams of a step of message addition to a transmission queue, according to the inventive method.
Figure 3 is a block diagram of a step of message processing in the transmission queue, according to the block diagram of Figure 1.
Figure 4 is a block diagram of a step of message reception by an electronic device, according to the inventive method.
Figure 5 is a block diagram of a step of broadcast message transmission, according to the inventive method.
Figure 6 is a block diagram of a step of response message transmission in response to the broadcast message of Figure 5.
Figure 7 is a block diagram of a step of acknowledgement message transmission to acknowledge the response message, according to the inventive method.
Figure 8 is a diagrammatic view of two portable electronic devices communicating with each other according to a further embodiment of the present method.

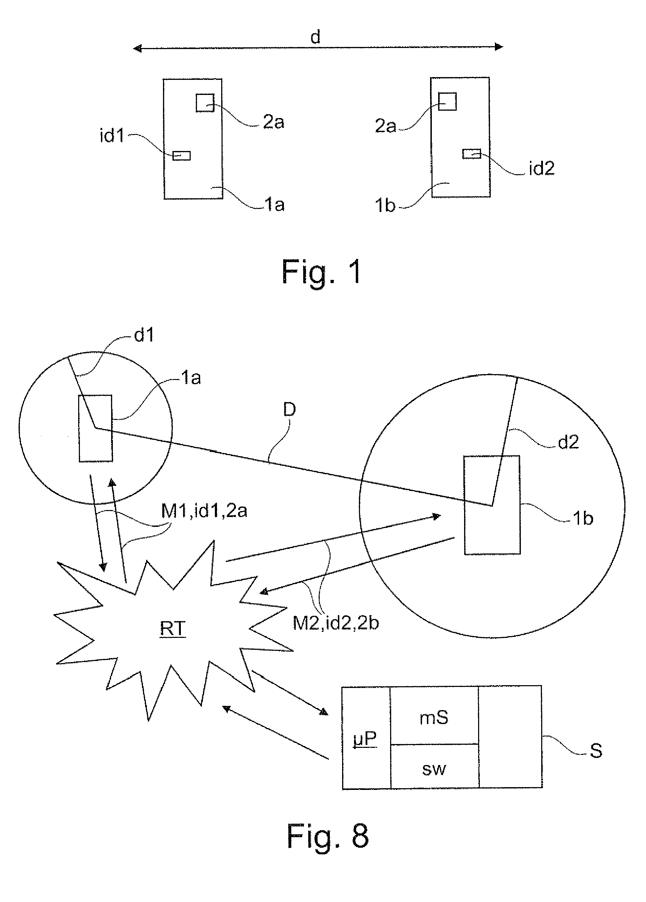

Referring to Figure 1, a communication is shown between two portable electronic devices 1a, 1b located at less than a predetermined distance d and comprising a characterization profile 2a, 2b of a corresponding user.

The portable electronic devices are, for instance, cell phones, notebooks, PDAs, etc. equipped with an integrated circuit comprising a transceiver that can transmit and receive at a predetermined frequency and according to a predetermined communication protocol.

Without limiting the scope of the present invention, the transceiver may communicate, for example, at a frequency of 2.4 GHz, with a Bluetooth® protocol, even in high-interference environments, at high data rates and with low absorption powers. Similarly, portable electronic devices may communicate with a different communication protocol, such as the Zigbee® protocol.

Reference to the above protocols has to be intended by way of example and without limitation; particularly, the communication method of the present invention may be implemented by a so-called "mesh" or "wireless mesh" network comprising a plurality of portable electronic devices that act as nodes, i.e. receivers, transmitters and repeaters of the mesh network.

Advantageously, the mesh network is decentralized, because it requires no server, and is particularly flexible because each node shall simply transmit a signal to the next node. The nodes act as repeaters to transmit the signal from the closest nodes to the nodes that are too far to be reached.

The characterization profile comprises information such as a nickname, the user's sex, his/her date of birth, the sex of a prospective communicating user, his/her minimum and maximum ages and the date of change of the characterization profile.

According to the present invention, the method comprises the steps of:
- sending a broadcast message M1 at a preset frequency from a first portable electronic device 1a, which message comprises a device ID id1 and the characterization profile 2a of the corresponding user;
- receiving the broadcast message M1 in a second electronic device 1b, comparing the characterization profile 2a of the broadcast message M1 with the characterization profile 2b of the second electronic device 1b and providing an affinity value 3 for the characterization profiles 2a, 2b;
- establishing communication between the users of the electronic devices 1a, 1b if the affinity value 3 exceeds a preset threshold 3a.

In one aspect of the present invention, the information of each characterization profile is associated with fields and the comparison step includes reading a first field A of the characterization profile 2a and a second field B of the characterization profile 2b, comparing the fields and increasing the affinity value 3 if the fields match.

For example, the field A or "sex" of the characterization profile 2a of a first user X has a value "M", i.e. male, and the field B or "sex of a prospective communicating user" of the profile 2a of such user X has a value "F", i.e. female. In this example, the comparison step includes reading of the value "F" from the field B of the characterization profile 2a, reading the field A of the characterization profile 2b of a second user Y, e.g. having a value "F", and increasing the affinity value 3, because these values "F" match.

In other words, the comparison step includes "matching" of the fields of the characterization profiles associated with different users.

In one aspect of the preset invention, the comparison step includes assignment of a weight to each field of the characterization profile, as a function of the importance of such field in determining the affinity value 3. Advantageously, field weights allow prioritization of certain features or tastes of the users of interest.

For example, the field B or "sex of a prospective communicating user" may have a numeric weight of ten and the field C or "age of a prospective communicating user" may have a numeric weight of two; in this case, the affinity value 3 is increased, e.g. increased by ten units, if the field "sex" of the user Y matches the field "sex of a prospective communicating user" of the user X and is increased, e.g. by two units, if the field "age" of the user Y matches the field "age of a prospective communicating user" of the user X.

In one aspect of the present invention, the step of comparing and providing an affinity value 3 is carried out using an algorithm or a neural network.

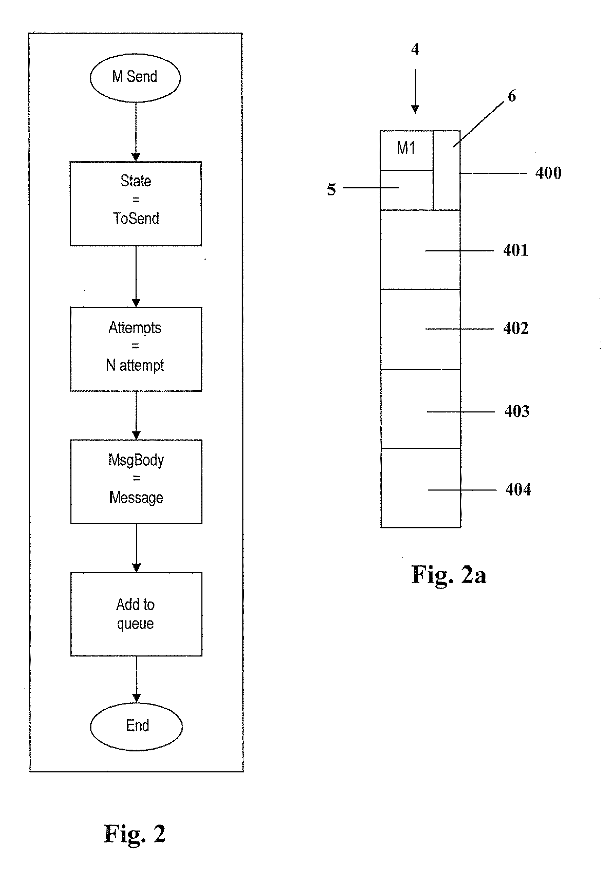

Referring to Figure 2, a transmission of a broadcast message M1 is schematically shown, which comprises the step of adding such message M1 to a transmission queue or stack 4 having a plurality of records 400, 401, 402, .... Each record of the queue 4 comprises a transmission state 5 for the broadcast message M1, having a predetermined value, associated with a request for transmission of the broadcast message M1, a request for deletion of the record 400, 401, 402, ... from the queue 4 or a request for relocation of the record 400, 401, 402, .. in the queue 4 for later transmission, respectively. Particularly, Figure 2a schematically shows the queue 4, with a record 400 comprising the broadcast message M1 and the transmission state 5 and Figure 2 is a block diagram of the transmission of the broadcast message M1, which includes adding the message M1 to a record of the queue, setting its transmission state 5 (ToSend) and queuing the record.

More particularly, the method of the invention includes a queue 4 processing step, which comprises accessing the broadcast message M1 to be processed, reading the transmission state 5 for the message M1 and transmitting the message M1 if the value of the state 5 matches the transmission request. After transmission, the broadcast message M1 is deleted by removal of its record from the queue.

In one aspect of the present invention, the second portable electronic device 1b transmits a response message M2 to the broadcast message M1, comprising the characterization profile 2b of the second electronic device 1b, to the first electronic device 1. Particularly, the first portable electronic device 1a receives the response message M2 and performs a check on the affinity value 3, which comprises a further step of comparing the characterization profile 2b of the response message M2 with the characterization profile 2a of the first electronic device 1a.

According to this aspect of the invention, the comparison step is performed in both portable electronic devices 1a and 1b and may result in two different affinity values 3, e.g. because the user X is interested to the characterization profile 2b of the user Y and not vice versa. Referring to the above mentioned example, the field A or "sex" of the characterization profile 2b of the user Y has a value "M", but the field B or "sex of a prospective communicating user" of the profile 2a of such user X may have a value "F". In this case, the comparison step in the portable electronic device 1b of the user Y in does not increase the affinity value, and excludes any communication with the device 1a, because the user X of the latter is of male sex "M".

An additional step is provided in which an acknowledgement message M3 is transmitted from the first electronic device 1a to the second electronic device 2b, which message comprises the characterization profile 2a of the first electronic device 1a.

Communication is established by the transmission of a communication proposal message M4 from the second electronic device 1b to the first electronic device 1a, after reception of the acknowledgement message M3, and a later transmission of a communication acceptance message M5 from the first electronic device 1a to the second electronic device 1b, after reception of the communication proposal message M4.

The communication proposal message M4 and the communication acceptance message M5 are manually sent by the users of the corresponding electronic devices 1a, 1b. Particularly, the messages M1, M2, M3 are automatically sent to select devices of users having similar characterization profiles. Nevertheless, the user may choose whether to establish a communication or not by sending the messages M4 and M5. Particularly, the communication proposal message M4 and the communication acceptance message M5 include a phone call by a telephone service provider and a corresponding call answer respectively.

The response message M2, the acknowledgement message M3, the communication proposal message M4 and the communication acceptance message M5 include the device ID id1, id2 of the electronic device 1a, 1b that sends the corresponding message M2, M3, M4, M5, also referred to as sender ID, and the device ID id1, id2 of the portable electronic device 1a, 1b that is intended to receive the corresponding message M2, M3, M4, M5, also referred to as receiver ID.

The above mentioned step of adding the broadcast message to the transmission queue is carried out for each message M1, M2, M3, M4, M5 to be sent between the devices.

Particularly, the messages M1, M2, M3, M4, M5 are added to the transmission queue or stack 4, in a record 400, 401, 402, ..., each record 400, 401, 402, ... including a transmission state 5 of the message M1, M2, M3, M4, M5. As mentioned above, each record has a predetermined value, associated with a request for transmission of the message M1, M2, M3, M4, M5 a request for deletion of the record 400, 401, 402, ... from the queue 4 or a request for relocation of the record 400, 401, 402, ... in the queue 4, respectively. Also in this case, the processing step accesses a message to be processed, reads the transmission state 5 of the message to be processed M1, M2, M4, M4, M5 and transmits the message M1, M2, M3, M4, M5 if the state value matches a transmission request. If the state value matches a deletion request, the record 400, 401, 402, ... is deleted from the queue 4 and if the transmission state matches a relocation request, the record is requeued.

Preferably, the transmission state is a single byte and is used both as a flag to indicate whether the message has been sent and the device is waiting for a response, and as a transmission attempt counter. Particularly, its values may be "0", if the message is be sent (ToSend), "FF", if the message is to be deleted (ToDel) and "X", with X>0, if the message is to be added to the queue again (ToDec).

As shown in Figure 2b, the record 400, 401, 402, ... further comprises a number of transmission attempts 6 for the message M1, M2, M3, M4, M5, such number 6 having a predetermined value 6b and being decreased in the message transmission step, as it will appear below. The message transmission step is not executed if the number of transmission attempts 6 is lower than a preset number 6a.

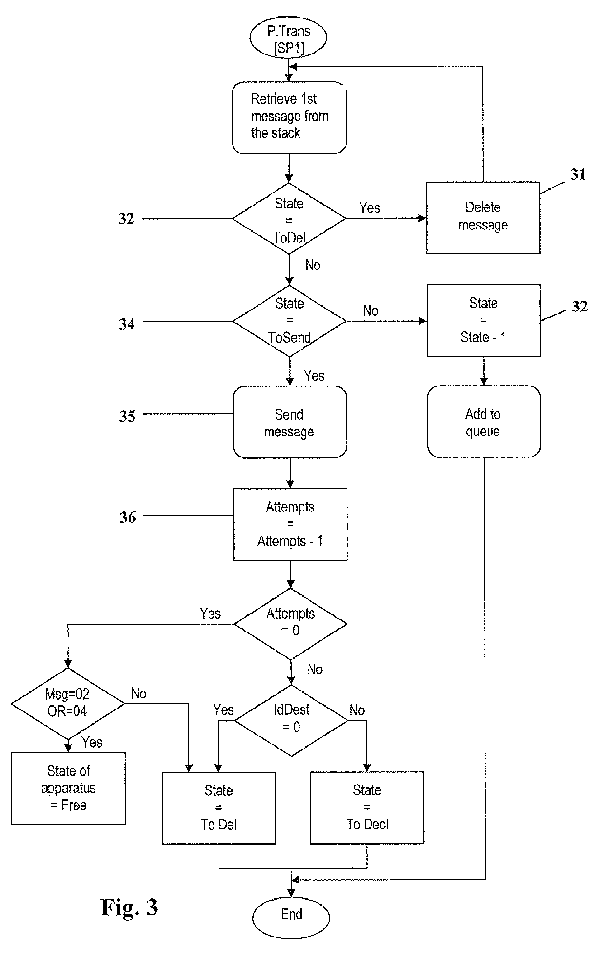

Referring to Figure 3, a transmission queue handling flowchart is shown, in which the transmission queue is handled as a function of the possible values of the transmission state 5, the number of attempts 6, as well as a state of the portable electronic device.

Particularly, the state of the device may be "free" when it is available for communication, "matching", during the comparison step, "connected", when it is in communication with another device and "unavailable" when it is not available to establish a communication.

Still referring to Figure 3, the following steps of the method are shown: deletion (block 31) of a message from the queue, if the state of the record is "to be deleted" (block 32), requeuing of the message (block 33), if the state of the record is not "to be sent" (block 34), transmission of the message (block 35), if the state of the message is "to be sent".

Finally, the block 36 indicates the decrease of the number of sending attempts, the block 37 the setting of the "to be deleted" state in a record containing a broadcast message M1, i.e. a message in which no device ID (IDDest=0) is set, and the block 38 indicates the setting of the "to be requeued" state in a record containing a message M2, M3, M4, M5 differing from the broadcast message.

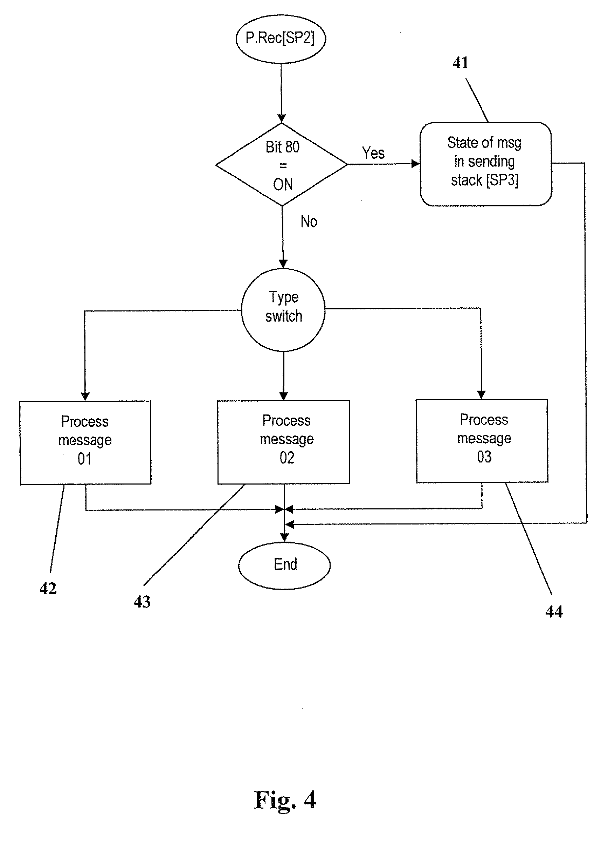

Referring to Figure 4, a message receiving step in a portable electronic device is diagrammatically shown. Particularly, the transceiver of the receiving device detects a message and transmits an interrupt signal. If the device is in an "unavailable" state, i.e. is not available for reception, the interrupt is disabled and all detected messages are removed, as shown in block 41 whereas, if the device is in a "free" state, the messages are added to a reception queue and processed, as shown in the blocks 42, 43, 44.

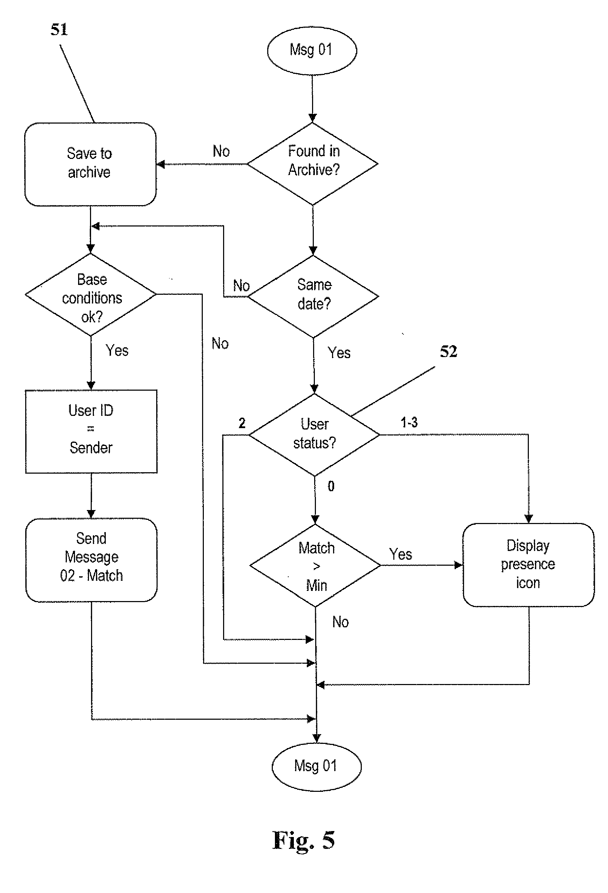

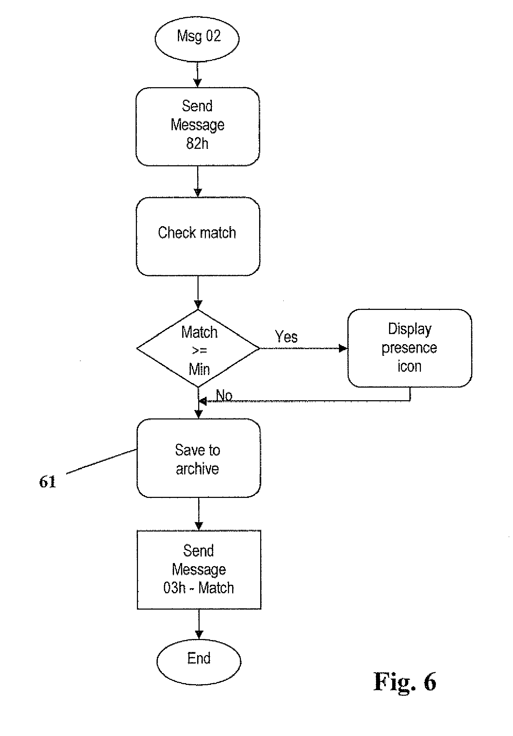

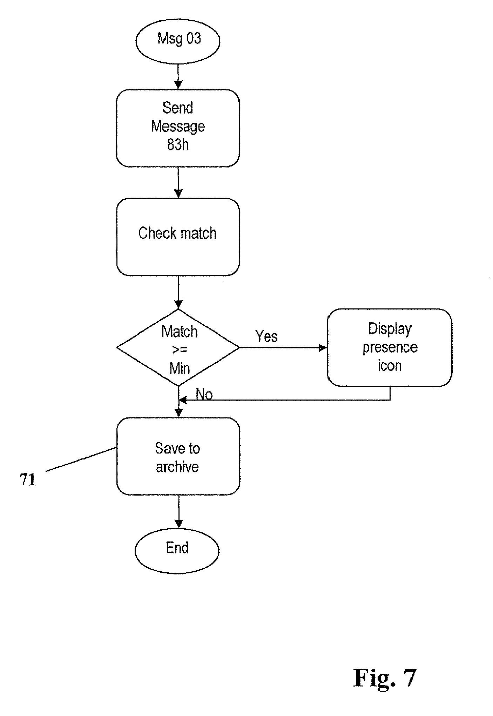

In one embodiment of the present aspect of the invention, the characterization profiles are grouped by preferences, e.g. by storing the profiles in classes such as "Stranger", "Friend", "Enemy" and "Vip" in an archive of the device. Advantageously, in this embodiment, when the device receives a characterization profile classified as "Friend", "Vip" or "Enemy", the comparison step may be avoided. Particularly, an icon appears on the display of the device to only establish the corresponding communication if the characterization profile is "Friend" or "Vip". Figure 5 schematically shows a user status checking step, where the "Stranger", "Friend", "Enemy", "Vip" statuses are designated as 0, 1, 2, 3 in the block 52 and a step in which the message is stored in an archive of the portable electronic device (block 51). Figure 6 and Figure 7 diagrammatically show the process of sending a response message M2 and an acknowledgement message M3, with corresponding archiving steps 61 and 71 following the comparison step, "Match>=Min.".

The present invention includes message transmission safety control; particularly, the hardware of each portable electronic device stores a unique identification code - shared by all devices - which allows coding and decoding of sent messages, as well as an unchangeable protection certificate. The device is also equipped with a SIM Card associated with the user.

The broadcast message M1 is encrypted through the single unique ID code, whereas all the other messages M2, M3, M4, M5 are encrypted both by the unique ID code and by the protection certificate. Unique ID code and protection certificate encryption prevents decryption of messages transmitted between two electronic devices by a third device, or interference of such device in their communication.

Such safety control also includes tracking of messages M1, M2, M3, M4, M5 transmitted between two portable electronic devices 1a, 1b, by storage in a central server.

In another aspect of the present invention, the method of communication between portable electronic devices 1a, 1b is managed by a telephone service provider that can locate devices situated at less than a predetermined geographical area.

Particularly, the portable electronic devices are connected to a GSM network of the telephone service provider and are associated with a characterization profile 2a, 2b of a corresponding user.

The method includes the steps of:
- locating at least two portable electronic devices 1a, 1b in the provider, which are situated at less than a predetermined distance (d) from one another;
- comparing the characterization profiles 2a of the two portable electronic devices 1b and providing an affinity value 3 for the characterization profiles 2a, 2b;
- sending a device ID id2 of further located portable electronic devices 1b, from the telephone service provider to each located portable electronic device 1a;
- establishing communication between the users of said electronic devices 1a, 1b if the affinity value 3 for their characterization profiles 2a, 2b exceeds a preset threshold 3a.

Particularly, the provider determines the position of the devices by locating a cell of the GSM network with which the devices are connected.

In a first embodiment, the characterization profiles 2a, 2b are stored in the telephone service provider and the comparison step is carried out by the provider. In this case, the provider only sends the ID id2 of a second device 1b to a first device 1a, if the affinity value 3 for their characterization profiles 2a, 2b exceeds the preset threshold 3a.

Advantageously, in these embodiments of the present invention, the portable electronic device receives a list of possible prospective communicating users from the provider, but communication proposals and communication acceptances are manually performed by the user.

In another embodiment, the sending step includes transmission of the characterization profile of further located portable electronic devices, from the provider to each located portable electronic device 1a, and the comparison step is carried out in each portable electronic device 1a. In this case, the list of possible prospective communicating users is processed by the portable electronic device; communication proposals and communication acceptances are manually performed by the user.

Advantageously, the devices require no transceiver for short-distance wireless communication and profile matching is carried out either in the service provider or in the devices.

The main advantages achieved by the present invention are as follows:

Advantageously, the communication method that is carried out in a plurality of portable electronic devices located at less than the preset distance allows the display of each device to only display the available connections to devices having a selected characterization profile.

Advantageously, the match request allows the user of the portable electronic device that sent the broadcast message to automatically check the characterization profile/s of one or more devices that responded to the broadcast message. Particularly, if automatic comparison of the characterization profile in the response message provides an affinity value below the preset threshold, the connection with the corresponding device is not displayed.

Advantageously, the response to the match request allows the device that sent the response message to check the characterization profile of the device that sent the broadcast message, the latter profile preferably comprising additional information that were not transmitted with the broadcast message. Advantageously, with the method of the invention, the comparison step selects the most relevant characterization profiles, but the communication request is manually actuated by the user; this allows refusal of communication with a device having a characterization profile with an affinity value exceeding the preset threshold.

Referring to Figure 8, which shows a further embodiment of the present invention, here communication among electronic devices as mentioned above, i.e. handheld devices, occurs through a RT telecommunication network. Through such RT network, electronic devices can establish a radio-frequency two-way signal communication M1, M2 to exchange data with a web server S. The RT communication network may be of any type known to those of ordinary skill in the art. Such RT communication network is, for instance, designed to support data and/or voice communication using any one of the multiplicity of commercially available communication protocols, such as TCP/IP, SNA (Systems Network Architecture), IPX (Internetwork Packet Exchange), AppleTalk, and so on. By way of example, the RT communication network may be a wide-area network, the Internet, a telephone network, such as a public switched telephone network (PSTN), a wireless telephone network, a private branch exchange (PBX) and/or the like, an infrared network, a wireless network including, without limitation, a communication network implemented according to any specification of IEEE 802.11 protocols, such as the Bluetooth protocol, and/or any other wireless communication network and/or any combination of these and/or other communication networks.

As shown in this Figure 8, one or more server computer or server S are provided, which may act as data processing systems. The servers S include all the electric and electronic devices required for their operation and interconnection with the RT network, which are well known to the skilled person and will not be further described.

The choice of using a server S affords improved usability of the method, as the electronic devices are not required to be equipped with additional electronic components.

For example, each of the servers S includes one or more processors µP, one or more memory banks mS, one or more input/output communication adapters, one or more mass storage devices and a memory (mS) resident program code sw.

As a further example, the server S may also be a web server, that may be used to process requests for web pages or other electronic documents, generated by the portable devices 1a and/or 1b.

The server has its own operating system O.S. and said one or more processors µP can execute the instructions of both the O.S. and other locally resident and/or remote computer products, such as the program code sw.

The server S may also be able to execute a variety of server applications, including HTTP servers, FTP servers, CGI servers, database servers, Java, etc. The server S may also implement one or more file servers, application servers and/or transaction processing servers which include, in addition to the operating system O.S. one or more client accessible applications running on one or more of the portable devices 1a and/or 1b.

The server S may also include the database servers, such as those sold by Oracle, Microsoft, Sybase, IBM and the like. Such database servers may process client database requests running on a device, e.g. of the type designated by numeral 2, of the user/s.

It shall be noted that the program code sw in the server S is adapted to carry out the steps of the method to allow the electronic devices to communicate when they are situated at less than a particular distance.

By having the program code sw at least partially reside in the memory mS of the server S, higher computing powers may be obtained, and characterization profiles 2a, 2b may be recorded and/or changed even when the electronic devices are not used.

The steps of the method may be advantageously implemented through the program code sw, which is configured for:
- receiving the first broadcast message M1 for the first electronic device 1a, comprising the first device ID id1 and the first characterization profile 2a of the user;
- receiving the second broadcast message M2 for the second electronic device 1b, comprising the second device ID id2 and the second characterization profile 2a of another user;
- receiving a first maximum distance value d1 for the first electronic device and a second maximum distance value d2 for the second electronic device. Particularly, the server S receives both the first maximum distance value d1 and the second maximum distance value d2, which can be selected or indicated by their respective users.

Such values identify the maximum distance within which each user authorizes signal communication between said two portable handheld electronic devices, i.e. the value within which the user wants to locate the other electronic device. Maximum distance values may be selected as desired by users from a pre-sorted list provided, for instance, when the users register on the web site S. The maximum distance values d1 and/or d2 may range from a minimum to a maximum predetermined values.

For instance, the first value d1 is selected to be 50 m, whereas the second value d2 is selected to be 500 m. This shows that the user that selected a d1 of 50 m wants to locate another device within a distance from his/her device, of not more than 50 m (i.e. in an area having a diameter of 100 m).

Advantageously, the program code sw determines the distance D between the first electronic device 1a and the second electronic device 1b and checks that such distance D is smaller than both said first maximum distance value d1 and said second maximum distance value d2.

Such check provides the technical effect that the user is only shown the electronic devices that actually fulfill the maximum distance parameter that was previously selected during registration.

Considering the above mentioned numbers, the distance between the two devices 1a and 1b is equal to or smaller than 50 m.

Once this has been ascertained, i.e. once the D value has been confirmed to be lower than both the d1 value and the d2 value, the method provides comparison between the first characterization profile 2a and the second characterization profile 2b, which have been, for instance, previously stored by the corresponding users in the memory mS of the server S.

Such comparison is followed by a step in which an affinity value 3 is generated for the characterization profiles 2a, 2b and communication is established between the users of the electronic devices 1a, 1b if the affinity value 3 exceeds a preset threshold 3a.

The steps of comparing profiles and establishing communication if the affinity value exceeds the threshold is the same as described above with reference to Figures 1 to 7.

If the D value is higher than the d1 value and lower than d2, assuming that the d1 value is lower than the d2 value then, according to the method, the user at distance d1 may be notified of the existence of a compatible user at a greater distance than that selected in his/her profile (i.e. greater than the maximum preset distance d1), and allow the user to choose whether to contact such user or not.

It shall be noted that the portable electronic devices 1a and/or 1b may include a GPS device and/or a GSM transceiver apparatus. In view of the above, the step of determining the distance D between the first and the second electronic devices is based on the geographical coordinates received from said GPS device and transmitted to the web server S.

Otherwise, the step of determining the distance D between the first and the second electronic devices is based on the coordinates of the radio cell of the GSM architecture and transmitted to the web server S.

The step of determining the distance D between the first and the second electronic devices in the case implemented by the coordinates of the radio cell of the GSM architecture includes estimating the average distance of the portable electronic devices 1a, 1b from the base station of the cell of interest.

## Claims

1. A method of communication among portable electronic devices (1a, 1b) situated at less than a predetermined distance (d) and comprising a characterization profile (2a, 2b) of a corresponding user, the method comprising the steps of:
- sending a broadcast message (M1) at a preset frequency from a first of said electronic devices (1a), which message comprises a device ID (id1) and the characterization profile (2a) of the corresponding user;
- receiving said broadcast message (M1) in a second of said electronic devices (1b);
- comparing the characterization profile (2a) of the broadcast message (M1) with the characterization profile (2b) of the second electronic device (1b) and providing an affinity value (3) for said characterization profiles (2a, 2b);
- establishing communication between the users of said electronic devices (1a, 1b) if said affinity value (3) exceeds a preset threshold (3a).

2. A method of communication among portable handheld electronic devices (1a, 1b), each electronic device being able to establish a radio-frequency two-way communication (M1,M2) to exchange data with a web server (S), said web server (S) comprising a microprocessor (µP), a memory (mS) and a program code (sw) residing in said memory (mS), said program code (sw) being executable by said microprocessor (µP) and being configured to implement the steps of:
- receiving a first broadcast message (M1) for a first electronic device (1a), comprising a first device ID (id1) and a first characterization profile (2a) of a user;
- receiving a second broadcast message (M2) for a second electronic device (1b), comprising a second device ID (id2) and a second characterization profile (2a) of another user;
- receiving a first maximum distance value (d1) for said first electronic device and a second maximum distance value (d2) for said second electronic device, said first and second maximum distance values (d1, d2) being selectable by their respective users and identifying the maximum distance within which each user authorizes signal communication between said two portable handheld electronic devices;
said method being **characterized in that it comprises** the steps of:
- determining the distance (D) between said first (1a) and said second (1b) electronic devices (1b);
- checking that said distance (D) is equal to or smaller than both said first maximum distance value (d1) and said second maximum distance value (d2) and, if this is ascertained (D<=d1 e D<=d2), comparing said first characterization profile (2a) with said second characterization profile (2b) to generate an affinity value (3) for said characterization profiles (2a, 2b) and
- establishing communication between the users of said electronic devices (1a, 1b) if said affinity value (3) exceeds a preset threshold (3a).

3. Method of communication among portable handheld electronic devices (1a, 1b) as claimed in claim 2, said portable electronic devices comprising a GPS device and/or a GSM transceiver apparatus, said step of determining the distance (D) between said first and second electronic devices being based on the geographical coordinates received from said GPS device and transmitted to said web server (S) and/or on the coordinates of the radio cell of the GSM architecture detected and transmitted to said web server (S).

4. Method as claimed in claim 1 or 2, **characterized in that** it comprises the step of transmitting a response message (M2) to said broadcast message (M1), comprising the characterization profile (2b) of said second electronic device (1b), from said second electronic device (1b) to said first electronic device (1a).

5. A method as claimed in claim 4, **characterized in that** it comprises the step of checking said affinity value (3) in said first electronic device (1a), which comprises a further step of comparing the characterization profile (2b) of the response message (M2) with the characterization profile (a) of said first electronic device (1a) and a further step of transmitting an acknowledgement message (M3) comprising the characterization profile (2a) of said first electronic device (1a) from said first electronic device (1a) to said second electronic device (2b).

6. A method as claimed in claim 5, **characterized in that** said step of establishing communication occurs by transmission of a communication proposal message (M4) from the second electronic device (1b) to the first electronic device (1a), after reception of said acknowledgement message (M3), and later transmission of a communication acceptance message (M5) from the first electronic device (1) to the second electronic device (1b), after reception of said communication proposal message (M4).

7. A method as claimed in claim 6, **characterized in that** the communication proposal message (M4) and the communication acceptance message (M5) are manually sent by the users of the corresponding electronic devices (1a, 1b).

8. A method as claimed in claim 1 or 2, **characterized in that** said comparison step includes reading of at least one first field (A) of the characterization profile (2a) of the first device (1a), reading of at least one second field (B) of the characterization profile (2b) of the second device (1b), and increasing said affinity value if the values of said fields (A, B) match.

9. A method as claimed in claim 8, **characterized in that** said affinity value is increased in proportion to a weight associated with said field (A, B) of said characterization profile (2a, 2b).

10. A method as claimed in any preceding claim, **characterized in that** said messages (M1, M2, M3, M4, M5) are added to a transmission queue or stack (4), comprising a plurality of records (400, 401, 402, ...), each record (400, 401, 402, ...) including a transmission state (5) for the message (M1, M2, M3, M4, M5), which has a predetermined value and is associated with a request for transmission of the message (M1, M2, M3, M4, M5), a request for deletion of the record (400, 401, 402, ...) from said queue (4) or a request for relocation of the record (400, 401, 402) in said queue (4).

11. A method as claimed in claim 10, **characterized in that** it comprises a step of processing the queue (4) which comprises accessing a message to be processed in the queue (4), reading the transmission state (5) for said first message (M1, M2, M3, M4, M5) and - transmitting the message (M1, M2, M3, M4, M5) if the transmission state value matches said transmission request, or - deleting the record (400, 401, 402, ...) if said value matches said deletion request or - relocating the record (400, 401, 402, ...) containing said message (M1, M2, M3, M4, M5) if said value matches said relocation request.

12. A method as claimed in claim 1 or 2, **characterized in that** said step of establishing communication among the users of said electronic devices (1a, 1b) establishes a telephone communication, a SMS communication or a chat communication.

13. A method of communication among portable electronic devices (1a, 1b) connected to a GSM network of a telephone service provider and associated with a characterization profile (2a, 2b) of a corresponding user, the method comprising the steps of:
- locating at least two of said portable electronic devices (1a, 1b) in the provider, which are situated at less than a predetermined distance (d) from one another;
- comparing the characterization profiles (2a) of two portable electronic devices (1b) and providing an affinity value (3) for the characterization profiles (2a, 2b);
- sending a device ID (id2) of further located portable electronic devices (1b), from the telephone service provider to each located portable electronic device (1a);
- establishing communication between the users of said electronic devices (1a, 1b) if the affinity value (3) for their characterization profiles (2a, 2b) exceeds a preset threshold (3a).

14. A communication method as claimed in claim 13, **characterized in that** said characterization profiles (2a, 2b) are stored in said provider, and that said comparison step is carried out by said telephone service provider.

15. A communication method as claimed in claim 14, **characterized in that** said sending step includes transmission of the characterization profiles of further located portable electronic devices (1a), from the provider to each located portable electronic device (1a), and the comparison step is carried out in each portable electronic device (1a).
